# EUROPÄISCHE PATENTSCHRIFT

(11) **EP 4 067 267 B1**
(45) Veröffentlichungstag und Bekanntmachung des Hinweises auf die Patenterteilung: **30.08.2023**
(21) Anmeldenummer: 22163615.2
(22) Anmeldetag: 22.03.2022
(51) Int. Cl.: B65G 17/22, B65G 17/38, B65G 17/46, B65G 23/06

(54) **TRANSPORTSYSTEM**
TRANSPORT SYSTEM
SYSTÈME DE TRANSPORT

(30) Priorität: 23.03.2021 DE 202021101500 U
(43) Veröffentlichungstag der Anmeldung: 05.10.2022
(73) Patentinhaber: TAKTOMAT kurvengesteuerte Antriebssysteme GmbH, 86554 Pöttmes (DE)
(72) Erfinder: HOFSTETTER, Norbert, 86676 Hollenbach (DE)
(74) Vertreter: Glück Kritzenberger Patentanwälte PartGmbB

(56) Entgegenhaltungen:
- DE-A1-102017 201 310
- DE-A1-102018 100 409
- US-B1- 6 876 896

## Beschreibung

Die Erfindung bezieht sich auf ein Transportsystem zur Beförderung von Gegenständen entlang einer Transportstrecke.

Transportsysteme mit umlaufenden Transportelementen, die von kettenartig miteinander verbundenen Transportpaletten gebildet sind, sind in verschiedenen Ausführungen und für verschiedene Anwendungen bekannt.

Auch sind aus dem Stand der Technik bereits Transportsysteme bekannt, bei denen das Transportelement entlang einer Transportstrecke bewegt wird, deren Bewegungsbahn zumindest abschnittsweise einen konkaven Verlauf aufweist, so dass insbesondere die Transportpaletten dazu ausgebildet sein müssen, an der durch ihre jeweilige Oberseite gebildete Transportebene diese konkave Bewegungsbahn zur Beförderung der Gegenstände bereitzustellen. In der Regel ist hierfür eine beidseitige Führungseinrichtung der Transportpaletten vorgesehen, die die Transportpaletten parallel der Bewegungsbahn und damit insbesondere auch parallel der durch die Transportpaletten gebildeten Transportebene, führt.

Auf dem wenigstens einen konkaven Abschnitt der Bewegungsbahn der Transportpaletten eines derartigen Transportsystems erfolgt beispielsweise eine Inspektion und/oder Bearbeitung von auf bzw. an den Transportpaletten angeordneten Gegenständen oder Werkstücken. Vorzugsweise erfolgt aber an diesem konkaven Abschnitt die Inspektion oder Untersuchung eines dort angeordneten Gegenstandes oder Körpers, beispielsweise eines tierischen oder menschlichen Körpers zur Erstellung einer medizinischen Diagnose. An den Transportpaletten sind dann Funktionselemente vorgesehen, die diese Inspektion oder medizinische Untersuchung ermöglichen. Die Funktionselemente sind beispielsweise optische Spiegel für ein optisches Abtasten oder Scannen der Oberfläche des betreffenden Körpers oder aber Reflektoren für eine Strahlung eines medizinischen bildgebenden Systems, beispielsweise Reflektoren für eine gebündelte elektromagnetische Strahlung eines MRT-Systems und/oder Reflektoren für Röntgenstrahlung und/oder Ultraschall.

Dies erfordert eine hochpräzise und möglichst toleranzfreie Führung der Transportpaletten entlang der Transportstrecke des Transportsystems.

Das Dokument DE 10 2018 100409 A1 offenbart ein Transportsystem zur Beförderung von Gegenständen entlang einer Transportstrecke bei dem Transportpaletten hochpräzise geführt werden. Das Transportsystem beinhaltet die Merkmale des Oberbegriffs des Patentanspruchs 1.

Aufgabe der Erfindung ist es daher, ein alternatives Transportsystem zur Beförderung von Gegenständen entlang einer Transportstrecke aufzuzeigen, welches sich durch eine hochpräzise und nahezu toleranzfreie Führung der Transportpaletten zumindest entlang der Transportstrecke auszeichnet. Zur Lösung dieser Aufgabe ist ein Transportsystem entsprechend dem Patentanspruch 1 ausgebildet. Die Unteransprüche betreffen dabei besonders vorteilhafte Ausführungsvarianten der Erfindung.

Der wesentliche Aspekt der vorliegenden Erfindung ist darin zu sehen, ein Transportsystem zur Beförderung von Gegenständen entlang einer Transportstrecke vorzusehen, umfassend wenigstens ein Transportelement, welches aus einer Vielzahl von über Kettengelenke gelenkig miteinander zu einer geschlossenen Schleife verbundenen Kettengliedern besteht und über wenigstens ein Kettenrad in zumindest einer Transportrichtung umlaufend antreibbar ist, wobei die Kettenglieder als Transportpaletten ausgebildet sind, die zumindest abschnittsweise entlang der Transportstrecke beidseitig mittels einer ersten und zweiten Führungseinrichtung geführt sind, bei dem ein Kettengelenk jeweils eine zwischen der ersten und zweiten Führungseinrichtung verlaufende Gelenkachse aufweist, die an einem ersten freien Ende mit einer ersten Führungs- und Lagereinrichtung in der ersten Führungseinrichtung und an einem zweiten freien Ende mit einer zweiten Führungs- und Lagereinrichtung in der zweiten Führungseinrichtung geführt ist, wobei die erste und zweite Führungs- und Lagereinrichtung jeweils wenigstens eine erste und zweite Laufrolle umfassen, die zwischen einer ersten und zweiten, einander gegenüberliegenden und parallel zur Gelenkachse verlaufenden Führungsfläche der jeweiligen Führungseinrichtung geführt sind, wobei die erste Laufrolle in einem ersten Anlageabschnitt der ersten Führungsfläche und das zweite Laufrolle in einem zweiten Anlageabschnitt der zweiten Führungsfläche anliegen und zueinander vorgespannt geführt sind, wobei der erste und zweite Anlageabschnitt entlang der Gelenkachse zueinander versetzt und einander gegenüberliegend sind. Das erfindungsgemäße Transportsystem zeichnet sich insbesondere dadurch aus, dass zumindest eine Gelenkachse wenigstens einer Transportpalette des Transportsystems an dem ersten und zweiten freien Ende einen ersten und zweiten Gelenkachsenabschnitt aufweist, wobei der erste Gelenkachsenabschnitt eine erste Rotationsache für die jeweils erste Laufrolle und der jeweils zweite Gelenkachsenabschnitt eine zweite Rotationsachse für die jeweils zweite Laufrolle ausbildet, und wobei die jeweils erste Rotationsachse versetzt, insbesondere parallel versetzt, zu der jeweils zweiten Rotationsachse verläuft. Besonders vorteilhaft wird durch das an gegenüberliegenden Seiten entlang der Achse versetzte Verspannen der jeweiligen ersten und zweiten Laufrolle der ersten und zweiten Führungseinrichtung zueinander eine hochpräzise und nahezu toleranzfreie Führung der entsprechenden Transportpalette in Transportrichtung erreicht.

Gemäß einer vorteilhaften Ausführungsvariante kann dabei vorgesehen sein, dass die erste und/oder die zweite Gelenkachse im Bereich der jeweiligen Gelenkachsenabschnitte als Exzenterachse ausgebildet ist.

Gemäß einer weiteren vorteilhaften Ausführungsvariante kann dabei vorgesehen sein, dass auf den jeweiligen Gelenkachsenabschnitten der ersten und zweiten Rotationsachsen Laufrollen mit einem insbesondere identischen Außendurchmesser der Laufflächen drehbar angeordnet sind, derart, dass sich an den Laufflächen der Laufrollen ein Höhenversatz einstellt, der die Verspannung der Laufrollen an den ersten und zweiten Anlageabschnitten unterstützt.

Gemäß einer nochmals weiteren vorteilhaften Ausführungsvariante kann dabei vorgesehen sein, dass die Gelenkachse an dem ersten freien Ende den ersten und zweiten Gelenkachsenabschnitt aufweist, wobei der erste Gelenkachsenabschnitt die erste Rotationsache für die erste Laufrolle und den zweiten Gelenkachsenabschnitt der zweiten Rotationsachse für die zweite Laufrolle ausbildet, und wobei die jeweils erste Rotationsachse versetzt, insbesondere parallel versetzt, zu der jeweils zweiten Rotationsachse verläuft.

Gemäß einer nochmals weiteren vorteilhaften Ausführungsvariante kann dabei vorgesehen sein, dass die Gelenkachse an dem zweiten freien Ende den ersten und zweiten Gelenkachsenabschnitt aufweist, wobei der erste Gelenkachsenabschnitt die erste Rotationsache für die erste Laufrolle und den zweiten Gelenkachsenabschnitt der zweiten Rotationsachse für die zweite Laufrolle ausbildet, und wobei die jeweils erste Rotationsachse versetzt, insbesondere parallel versetzt, zu der jeweils zweiten Rotationsachse verläuft.

Gemäß einer nochmals weiteren vorteilhaften Ausführungsvariante kann dabei vorgesehen sein, dass die Gelenkachse einteilig, insbesondere einstückig ausgebildet ist und/oder aus einem Vollmaterial hergestellt ist.

Gemäß einer nochmals weiteren vorteilhaften Ausführungsvariante kann dabei vorgesehen sein, dass die Länge des jeweiligen ersten und zweiten Gelenkachsenabschnitts der ersten und zweiten Rotationsachsen an die Breite der entsprechend dort aufgenommenen Laufrollen angepasst ist, insbesondere der Breite der Lauffläche der entsprechend dort angeordneten Laufrolle entspricht.

Gemäß einer nochmals weiteren vorteilhaften Ausführungsvariante kann dabei vorgesehen sein, dass die jeweils zweite Rotationsachse der Gelenkachse als axialer Lagersitz für die jeweils zweite Laufrolle und die erste Rotationsachse als exzentrischer Lagersitz für die jeweils erste Laufrolle ausgebildet ist.

Gemäß einer nochmals weiteren vorteilhaften Ausführungsvariante kann dabei vorgesehen sein, dass der parallele Abstand der zentrischen Mittellinie der ersten Rotationsachse zu der zentrischen Mittlinie der zweiten Rotationsachse zwischen 0,1mm und 0,7mm, vorzugsweise 0,2 mm beträgt.

Gemäß einer nochmals weiteren vorteilhaften Ausführungsvariante kann dabei vorgesehen sein, dass die Gelenkachse an jeder Seite im Bereich der freien Enden jeweils eine Verspanneinrichtung zum verstellbaren Verspannen der jeweils ersten Laufrollen gegenüber den jeweils zweiten Laufrollen aufweist.

Gemäß einer nochmals weiteren vorteilhaften Ausführungsvariante kann dabei vorgesehen sein, dass die jeweilige Verspanneinrichtung als Schraubverspanneinrichtung, vorzugsweise als Außensechskant-Schraubverspanneinrichtung, ausgebildet ist, die über eine Spannkraft die jeweils die auf der ersten Rotationsachse angeordneten ersten Laufrollen gegen die jeweils auf der zweiten Rotationsachse angeordneten zweiten Laufrollen derart verspannt, dass die Laufrollen auf die sich gegenüberliegenden ersten und zweiten Anlageabschnitte gepresst werden.

Gemäß einer nochmals weiteren vorteilhaften Ausführungsvariante kann dabei vorgesehen sein, dass die Gelenkachse in der Transportpalette mittels eines lösbaren Fixierelementes, insbesondere eines Gewindestiftes, mechanisch fixierbar ist.

Besonders vorteilhaft können die beiden freien Enden der Gelenkachse in der ersten und zweiten Führungseinrichtung in zwei gegenüberliegend und parallel zur Transportrichtung orientierte Führungsebenen geführt sein.

Weiterhin vorteilhaft kann auch vorgesehen sein, dass die erste und zweite Laufrolle der ersten Führungs- und Lagereinrichtung um die Gelenkachse drehbar und unmittelbar benachbart an dieser im Bereich des ersten freien Endes vorgesehen sind und/oder die erste und zweite Laufrolle der zweiten Führungs- und Lagereinrichtung um die Gelenkachse drehbar und unmittelbar benachbart an dieser im Bereich des zweiten freien Endes vorgesehen sind.

Nochmals bevorzugt kann die erste Laufrolle der ersten Führungs- und Lagereinrichtung an dem ersten Anlageabschnitt der ersten Führungsfläche anliegend gegen die an dem zweiten Anlageabschnitt der zweiten Führungsfläche anliegende zweite Laufrolle in der ersten Führungseinrichtung vorgespannt geführt sein und die erste Laufrolle der zweiten Führungs- und Lagereinrichtung an dem ersten Anlageabschnitt der ersten Führungsfläche anliegend gegen die an dem zweiten Anlageabschnitt der zweiten Führungsfläche anliegende zweite Laufrolle in der zweiten Führungseinrichtung vorgespannt geführt sein.

Weiterhin vorteilhaft kann die erste und zweite Laufrolle der ersten Führungs- und Lagereinrichtung vorgespannt gegenüber der ersten und zweiten Laufrolle der zweiten Führungs- und Lagereinrichtung geführt sein.

In einer vorteilhaften Ausführungsvariante kann die erste Führungseinrichtung zwischen der ersten und zweiten Führungsfläche einen ersten Führungsraum aufweisen, der im Bereich der ersten und zweiten Anlagefläche in den ersten Führungsraum zurückspringt, indem der erste Führungsraum in diesem Bereich gestuft ausgebildet ist und/oder die zweite Führungseinrichtung zwischen der ersten und zweiten Führungsfläche einen zweiten Führungsraum aufweisen, der im Bereich der ersten und zweiten Anlagefläche in den zweiten Führungsraum zurückspringt, indem der zweite Führungsraum in diesem Bereich gestuft ausgebildet ist.

Schließlich können vorteilhaft die Transportpaletten mit ihrer jeweiligen Unterseiten kontaktschlüssig an einer parallel zur Transportrichtung verlaufenden Oberseite einer Führungsschiene geführt sein.

Der Ausdruck "im Wesentlichen" bzw. "etwa" bzw. "ca." bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an einem Ausführungsbeispiel näher erläutert. Es zeigen:
- Fig. 1: in vereinfachter perspektivischer Darstellung eine beispielhafte Ausführungsvariante eines erfindungsgemäßen Transportsystems;
- Fig. 2: in vereinfachter Darstellung eine Draufsicht auf das erfindungsgemäße Transportsystem gemäß der Figur 1;
- Fig. 3: in vereinfachter perspektivischer Darstellung eine beispielhafte weitere Ausführungsvariante eines erfindungsgemäßen Transportsystems;
- Fig. 4: in vereinfachter perspektivischer Darstellung eine beispielhafte nochmals weitere Ausführungsvariante eines erfindungsgemäßen Transportsystems;
- Fig. 5: in perspektivischer Darstellung eine beispielhafte Ausführungsvariante zweier freigestellter und gelenkig miteinander verbundener Transportpaletten des erfindungsgemäßen Transportsystems;
- Fig. 6: einen Vertikalschnitt des Transportsystems im Bereich der ersten und zweiten Führungseinrichtung mit einer Transportpalette gemäß Figur 5;
- Fig. 7a: einen Vertikalschnitt durch eine beispielshafte Ausführungsvariante einer erfindungsgemäßen Transportpalette, und
- Fig. 7b: einen vergrößerten Ausschnitt der Transportpalette gemäß Figur 7a.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

Ferner sind zum besseren Verständnis in den Figuren jeweils die senkrecht zueinander verlaufenden Koordinaten- oder Raumachsen X, Y und Z angegeben, von denen bei der dargestellten Ausführungsform die X-Achse und Y-Achse eine horizontale oder im Wesentlichen horizontale XY-Ebene definieren und von denen die Z-Achse senkrecht zu dieser XY-Ebene orientiert ist.

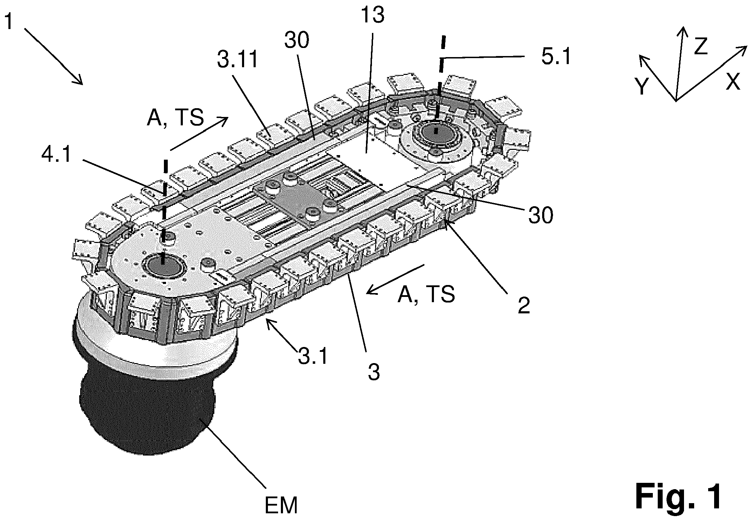

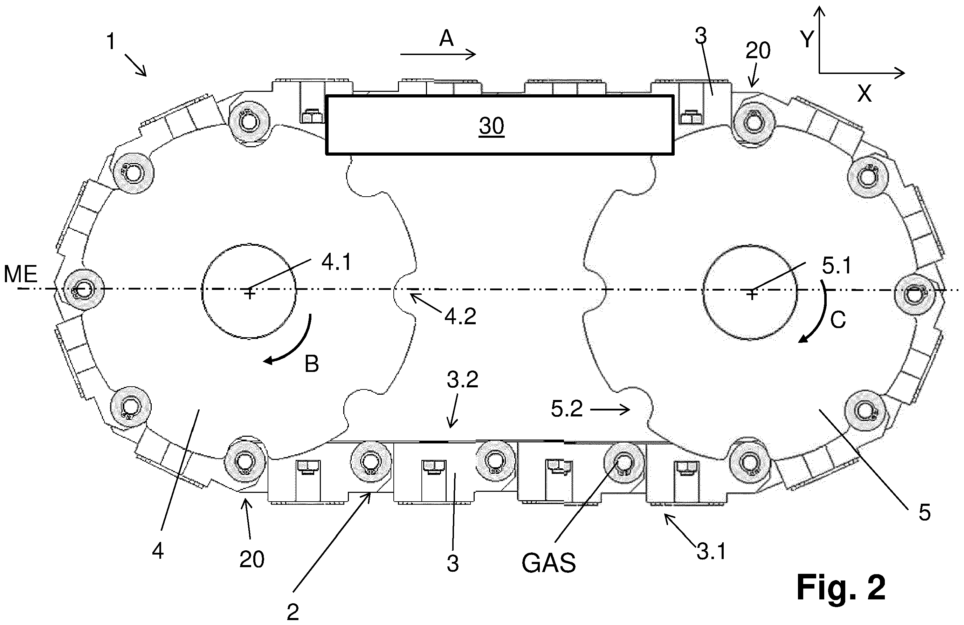

In den Figuren ist mit 1 ein Transportsystem zur Beförderung von Gegenständen entlang einer Transportstrecke TS bezeichnet. Das Transportsystem 1 umfasst wenigstens ein scharnierband- oder kettenartiges Transportelement 2 (Kettenstrang) mit einer Vielzahl von Transportpaletten 3, die über Kettengelenke 20 kettengliederartig und gelenkig miteinander verbunden sind, und zwar zu dem eine geschlossene Schlaufe bildenden Transportelement 2, welches über beispielweise zwei in horizontaler Richtung, d.h. in Richtung der X-Achse voneinander beabstandeten Kettenräder 4 und 5 geführt ist, wie dies in den Figuren 1 und 2 nähergehend dargestellt ist. Dabei ist wenigstens eines der beiden Kettenrädern 4 und 5, vorzugsweise das Kettenrad 4 unmittelbar, d.h. getriebelos durch einen Elektromotor EM, bevorzugt durch einen Torquemotor, in zumindest einer Transportrichtung A umlaufend antreibbar. Die beiden Kettenräder 4 und 5 sind mit ihren Achsen 4.1 bzw. 5.1 in vertikaler Richtung oder im Wesentlichen in vertikaler Richtung, d.h. parallel zur Z-Achse orientiert in einem Maschinenrahmen 13 gelagert.

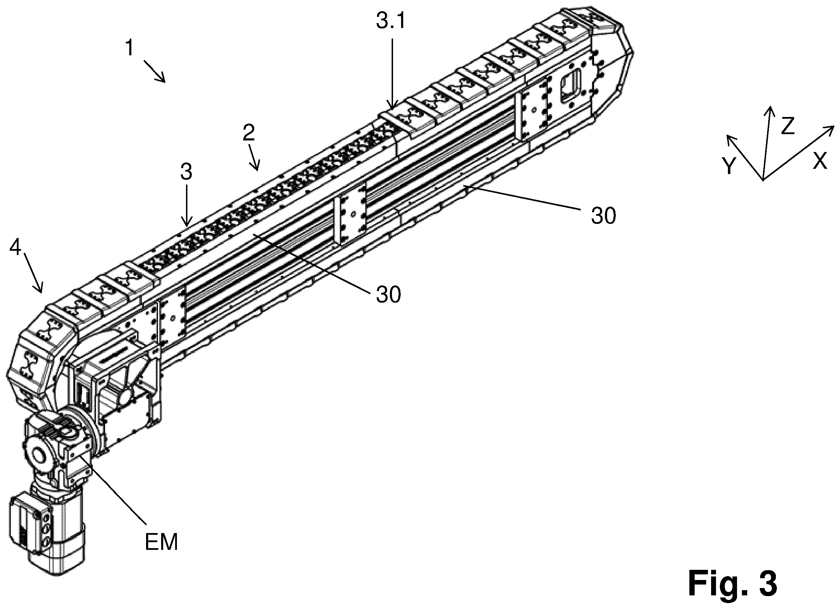

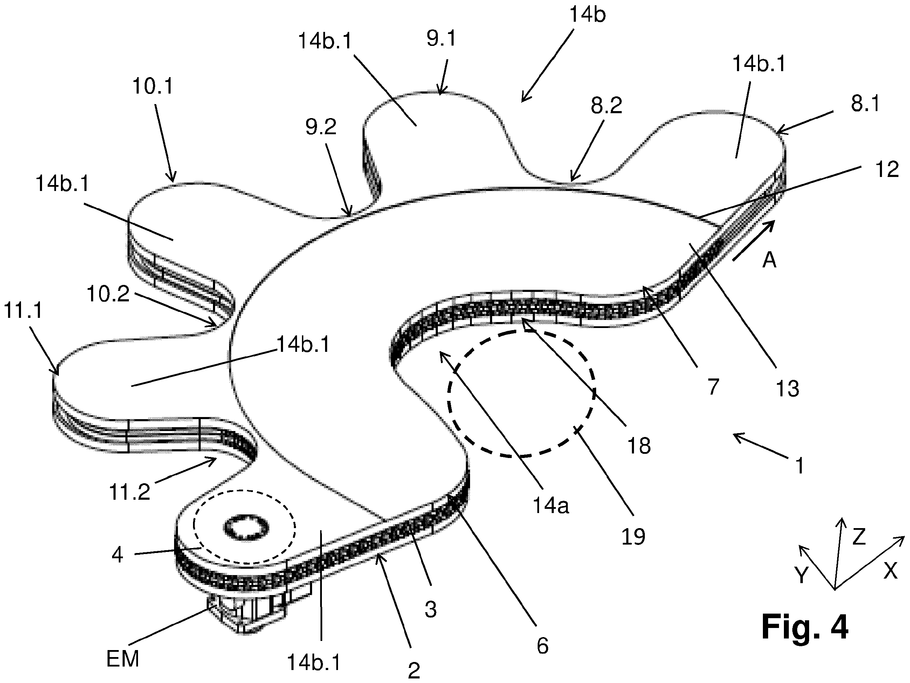

Unterschiedlich dazu ist in den Figur 3 und 4 eine Ausführungsvariante des Transportsystems 1 gezeigt, in der nur ein Kettenrad 4 vorgesehen ist, über das das Transportelement 2 in wenigstens einer Transportrichtung A endlos umlaufend mittels des Elektromotors EM antreibbar ausgebildet ist. Dies wird ermöglicht, indem das Transportelement 2 in dem nicht mit dem Kettenrad 4 in Eingriff stehenden Transportabschnitt der Transportstrecke TS beidseitig mittels einer ersten und zweiten Führungseinrichtung 30, 31 geführt ist.

Dabei ist das die geschlossene Schlaufe bildende Transportelement 2 in der Ausführungsvariante der Figur 4 über ein das Transportelement 2 in einer Transportrichtung A mit dem Elektromotor EM angetriebenes Kettenrad 4 sowie über mehrere Umlenkungen 6, 7, 8.1, 8.2, 9.1, 9.2, 10.1, 10.2, 11.1 und 11.2 geführt, die ebenso wie das Kettenrad 4 an einem Maschinenrahmen 13 vorgesehen sind und entgegen der Transportrichtung A mit zunehmender Wertigkeit ihrer Bezugsziffern auf einander folgen. Die Anordnung des Kettenrades 4 sowie der Umlenkungen 6, 7, 8.1, 8.2, 9.1, 9.2, 10.1, 10.2, 11.1 und 11.2 ist dabei so getroffen, dass die von dem Transportelement 2 gebildete Schlaufe einen nierenartigen Verlauf aufweist, d.h. die Transportpaletten 3 auf einer nierenartigen Umlauf- oder Bewegungsbahn bewegt werden. Die Umlauf- oder Bewegungsbahn weist zwischen den Umlenkungen 6 und 7 einen konkav gekrümmten Abschnitt 14a und weiter in Transportrichtung A zwischen der Umlenkung 7 und dem Kettenrad 4 einen Abschnitt 14b der Bewegungsbahn auf, der eine wesentlich größere Länge als der Abschnitt 14a besitzt und an dem der Verlauf der Bewegungsbahn der Transportpaletten 3 durch die Umlenkungen 8.1, 8.2, 9.1, 9.2, 10.1, 10.2, 11.1 und 11.2 bestimmt ist. Der Verlauf des Abschnittes 14b lässt sich so beschreiben, dass die mit der Linie 12 angedeutete konvexe Seite eines idealen nierenartigen Verlaufs mit einem wellen- oder meanderförmigen Verlauf überlagert ist, der durch die Umlenkungen 8.1, 8.2, 9.1, 9.2, 10.1, 10.2, 11.1 und 11.2 erzeugt ist, und zwar unter Ausbildung mehrerer, d.h. bei der dargestellten Ausführungsform unter Ausbildung von insgesamt vier Teilschlaufen oder mäanderförmigen Teilabschnitten 14b.1, die sich von der dem Abschnitt 14a abgewandten Seite der Linie 12 wegerstrecken. Der Maschinenrahmen 13 ist beispielsweise so angeordnet, dass die Ebene der geschlossenen Schlaufe des Transportelementes 2 eine horizontale oder im Wesentlichen horizontale Ebene in der YX-Ebene ausbildet. An einem der Teilabschnitte 14b.1 ist auch das Kettenrad 4 vorgesehen.

Außerhalb zumindest des Kettenrades 4, also in dem Transportabschnitt der Transportstrecke TS, in dem die Transportpaletten 3 nicht in Eingriff mit dem Kettenrad 4 stehen, sind die Transportpaletten 3 jeweils beidseitig mittels der an dem Maschinenrahmen 13 ausgebildeten ersten und zweiten Führungseinrichtung 30, 31 geführt. Damit ist das Transportelement 2, insbesondere die Transportpaletten 3, auch in dem konkav gekrümmten Abschnitt 14a der Transportstrecke TS beidseitig mittels der ersten und zweiten Führungseinrichtung 30, 31 geführt.

In der Ausführungsvariante der Figuren 1 und 2 erstreckt sich die an dem Maschinenrahmen 13 angeordnete erste und zweite Führungseinrichtung 30, 31 zumindest zwischen dem ersten und zweiten Kettenrad 4 und 5 und führt das Transportelement 2, insbesondere die einzelnen Transportpaletten 3 des Transportelementes 2, zumindest in diesem Transportabschnitt entlang der Transportstrecke TS - also in dem Transportabschnitt der Transportstrecke TS, in dem die Transportpaletten 3 außer Eingriff mit dem ersten und zweiten Kettenrad 4 bzw. 5 stehen. Die einzelnen Transportpaletten 3 sind somit zumindest abschnittsweise entlang der Transportstrecke TS beidseitig mittels der ersten und zweiten Führungseinrichtung 30 und 31 geführt.

Die von dem Transportelement 2 gebildete Schlaufe ist dabei in der Ausführungsvariante der Figuren 1 und 2 in einer horizontalen oder im Wesentlichen horizontalen Ebene, d.h. in der XY-Ebene angeordnet. Alternativ ist es jedoch auch möglich, wie in Figur 3 gezeigt, die von dem Transportelement 2 gebildete Schlaufe in einer vertikalen oder im Wesentlichen vertikalen Ebene, d.h. in einer XZ-Ebene, anzuordnen. Die räumliche Ausrichtung der von dem Transportelement 2 gebildeten Schlaufe ist dabei auf keine der beispielhaft gezeigten Ausführungsvarianten festgelegt. Vielmehr ist das Transportelement 2 in jeder beliebigen Ausrichtung im dreidimensionalen Raum anordenbar.

Die Transportpaletten 3 bilden an ihren jeweiligen Oberseiten 3.1 eine bahnartige Transport- oder Haltefläche TF aus, an der beispielsweise jeweils eine Aufnahme 3.11, gezeigt in Figur 1, vorgesehen ist und zwar für die Aufnahme von Gegenständen (z.B. Werkstücke oder andere Produkte), die mit dem umlaufenden Transportelement 2 in Transportrichtung A bewegt werden.

Das Transportsystem 1 ist bei der dargestellten Ausführungsform spiegelsymmetrisch zu einer Mittelebene ME ausgebildet, die die beiden Achsen 4.1 und 5.1 einschließt sowie auch senkrecht zu der XY-Ebene orientiert ist.

Bei der dargestellten Ausführungsform wird das Kettenrad 4 durch den Elektromotor EM bei der für die Fig. 1 und 2 gewählten Darstellung beispielsweise im Uhrzeigersinn entsprechend dem Pfeil B angetrieben. Dementsprechend läuft auch das frei drehbar am Maschinenrahmen 13 gelagerte und als Umlenkung dienende Kettenrad 4 im Uhrzeigersinn entsprechend dem Pfeil C um.

Dabei sind die beiden Kettenräder 4 und 5 identisch ausgebildet, und zwar jeweils als achtteilige Kettenräder, so dass sie jeweils acht Kettenrad-Eingriff- oder Mitnahmebereiche in Form von Aufnahmen 4.2, 5.2 aufweisen. Die Aufnahmen 4.2, 5.2 der Kettenräder 4, 5 greifen dabei drehpositionsabhängig in eine erste und zweite Führungs- und Lagereinrichtung 32, 33 ein, die an den jeweiligen freien Enden GAS1, GAS2 einer Gelenkachse GAS des Kettengelenkes 20 der jeweiligen Transportpaletten 3 vorgesehenen sind. In anderen Worten greifen also die ersten und zweiten Führungs- und Lagereinrichtungen 32, 33, die an den freien Enden der jeweiligen Gelenkachsen GAS des Kettengelenkes 4 vorgesehen sind, drehpositionsabhängig formschlüssig in die Aufnahmen 4.2, 5.2 der beiden Kettenräder 4 und 5 ein, so dass mittels des wenigstens einen angetrieben Kettenrades 4 eine Antriebsbewegung in Transportrichtung A auf das Transportelement 2 übertragbar ist.

Dabei kann die jeweilige Gelenkachse GAS des entsprechenden Kettengelenkes 20 als einteilige insbesondere einstückige Gelenkstange ausgebildet sein, die sich zwischen ihrem ersten und zweiten freien Ende GAS1, GAS2 derart erstreckt, dass das Kettengelenk 20 jeweils eine zwischen der ersten und zweiten Führungseinrichtung 30, 31 verlaufende Gelenkachse GAS aufweist. Die Gelenkachse GAS bildet dabei einen Gelenkbolzen des Kettengelenkes 20 zwischen zwei benachbarten Transportpaletten 3 aus. Bevorzugt kann die Gelenkachse GAS auch drehfest in der Transportpalette 3 aufgenommen bzw. angeordnet sein.

Damit bilden die zum Umfang des jeweiligen Kettenrades 4 bzw. 5 hin offenen taschenartigen Aufnahmen 4.2, 5.2 zwischen sich jeweils einen "Kettenradzahn" aus und besitzen einen Teilungsabstand der gleich der Kettengliedlänge KL zwischen zwei benachbarten Kettengelenken 20 der Kettenglieder des Transportelementes 2 ist, d.h. gleich der Länge jeder Transportpalette 3 bzw. des mittleren Achsabstandes einer durch die Kettengelenke 20 gebildeten Gelenkachse GAS zwischen zwei in Transportrichtung A aufeinander folgenden Kettengelenken 20.

Bei eingeschaltetem Elektromotor EM bewegen sich die Transportpaletten 3 somit in Transportrichtung A der geschlossenen Schlaufe des Transportelementes 2 entsprechenden Bewegungsbahn.

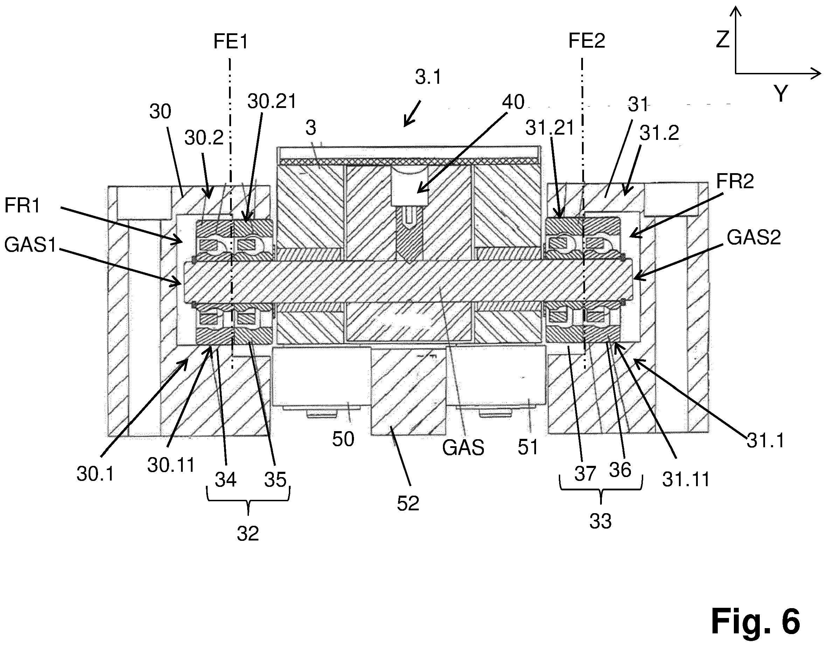

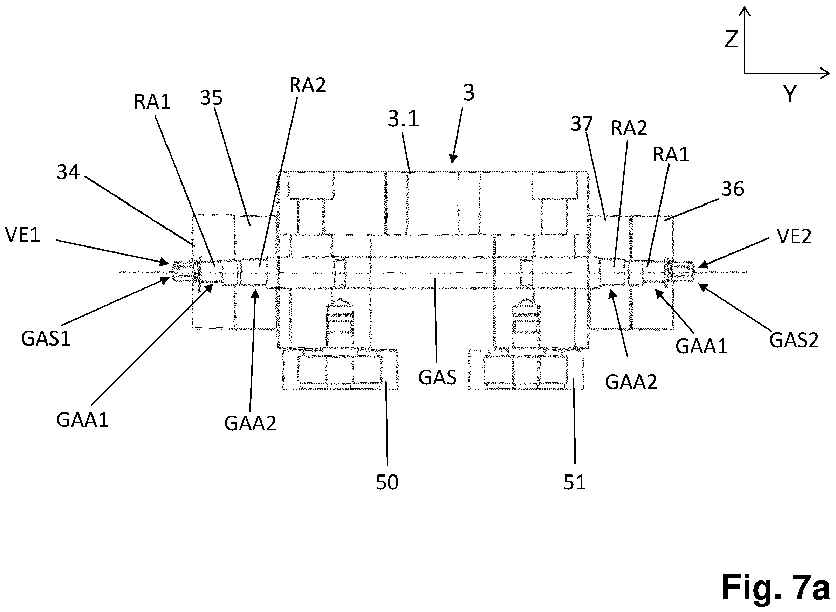

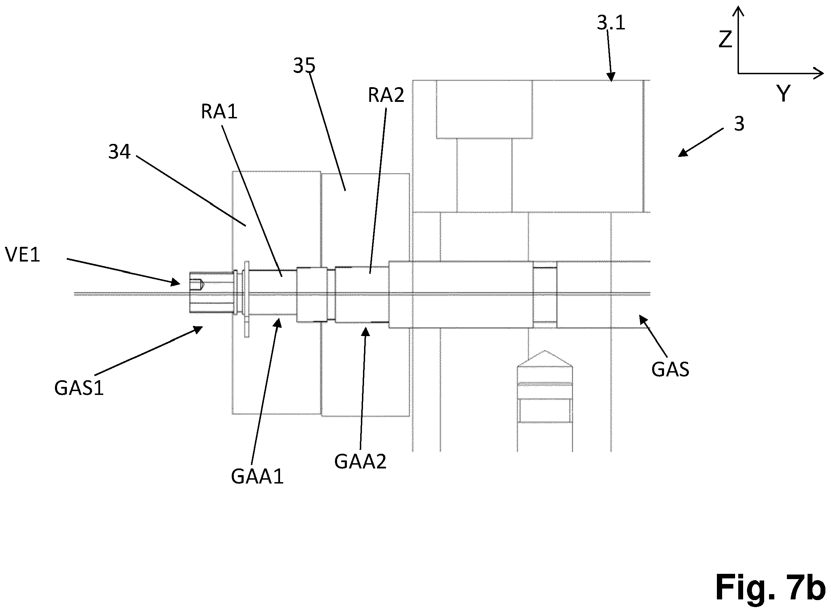

Wie insbesondere in den Figuren 6 und 7 gezeigt, ist die jeweilige Gelenkachse GAS eines entsprechenden Kettengelenkes 20 dabei an einem ersten freien Ende GAS1 mit der ersten Führungs- und Lagereinrichtung 32 in der ersten Führungseinrichtung 30 und an einem zweiten freien Ende GAS2 mit der zweiten Führungs- und Lagereinrichtung 33 in der zweiten Führungseinrichtung 31 geführt und zwar insbesondere in zwei gegenüberliegenden und parallel zur Transportrichtung A sowie damit vorzugsweise lotrecht zur Gelenkachse GAS orientierten Führungsebenen FE1, FE2. Mithin bildet die erste und zweite Führungseinrichtung 30, 31 in der Ausführungsvarianten der Figuren 6 und 7 damit eine horizontale Führung für die jeweilige Gelenkachse GAS aus.

Zudem umfassen die erste und zweite Führungs- und Lagereinrichtung 32, 33 hierfür jeweils wenigstens eine erste und zweite Laufrolle 34...37, die vorzugsweise um die Gelenkachse GAS des entsprechenden Kettengelenks 20 drehbar gelagert ausgebildet sein kann, und die zwischen einer ersten und zweiten, einander gegenüberliegenden und parallel zur Gelenkachse GAS verlaufenden Führungsfläche 30.1, 30.2 bzw. 31.1, 31.2 der jeweiligen ersten und zweiten Führungseinrichtung 30, 31 geführt sind.

Dabei sind die jeweiligen Laufrollen 34 und 35 vorzugsweise identisch zueinander sowie identisch zu den beiden weiteren Laufrollen 35 und 36 ausgebildet. Insbesondere weisen die Laufrollen 34 und 35 bzw. 36 und 37 einen identischen Durchmesser im Bereich der jeweiligen Lauffläche, d.h. einen identischen Außendurchmesser, sowie ein identische Breite der Lauffläche auf.

Dabei kann die jeweilige Lauffläche sämtlicher Laufrollen 34...37 aus einem Kunststoff gebildet sein.

Ferner vorteilhaft sind dabei sämtliche Laufrollen 34...37 jeweils mittels zwei Rollenlagern drehbar um die entsprechende Gelenkachse GAS gelagert. Die jeweiligen Rollenlager sind dabei unmittelbar benachbart, vorteilhaft kontaktschlüssig benachbart, an der entsprechenden Gelenkachse GAS angeordnet. Bevorzugt ist die Gelenkachse GAS drehfest in dem entsprechenden Transportpalette 3 aufgenommen, bzw. angeordnet.

Wie insbesondere in den Figuren 7a und 7b dargestellt, weist in dem erfindungsgemäßen Transportsystem 1 zumindest eine Gelenkachse GAS zumindest einer Transportpalette 3 an dem ersten und zweiten freien Ende GAS1, GAS2 jeweils einen ersten und zweiten Gelenkachsenabschnitt GAA1, GAA2 auf, wobei der erste Gelenkachsenabschnitt GAA1 eine erste Rotationsache RA1 für die jeweils erste Laufrolle 34 und 36 und der jeweils zweite Gelenkachsenabschnitt GAA2 eine zweite Rotationsachse RA2 für die jeweils zweite Laufrolle 35 und 37 ausbildet, und wobei die jeweils erste Rotationsachse RA1 versetzt, insbesondere parallel versetzt, zu der jeweils zweiten Rotationsachse RA2 verläuft.

Werden dabei auf die jeweiligen Gelenkachsenabschnitte GAA1, GAA2 identische Laufrollen 34...37 mit einem insbesondere identischen Außendurchmesser der Laufflächen drehbar angeordnet, so stellt sich an den Laufflächen der Laufrollen 34...37 ein Höhenversatz, bzw. eine Stufe, ein, die die Verspannung der Laufrollen 34...37 an den ersten und zweiten Anlageabschnitten 30.11, 30.21, 31.11, 31.21 weitergehend unterstützt. Die Gelenkachse GAS ist in dieser Ausführungsvariante im Bereich der jeweiligen Gelenkachsenabschnitte GAA1, GAA2 damit als Exzenterachse ausgebildet.

In anderen Worten kann also beispielsweise die Gelenkachse GAS an dem ersten freien Ende GAS1 den ersten und zweiten Gelenkachsenabschnitt GAA1, GAA2 aufweisen, wobei der erste Gelenkachsenabschnitt GAA1 die erste Rotationsache RA1 für die erste Laufrolle 34 und den zweiten Gelenkachsenabschnitt GAA2 der zweiten Rotationsachse RA2 für die zweite Laufrolle 35 ausbildet, und wobei die jeweils erste Rotationsachse RA1 versetzt, insbesondere parallel versetzt, zu der jeweils zweiten Rotationsachse RA2 verläuft.

Symmetrisch dazu kann die Gelenkachse GAS an dem zweiten freien Ende GAS2 ebenfalls den ersten und zweiten Gelenkachsenabschnitt GAA1, GAA2 aufweisen, wobei der erste Gelenkachsenabschnitt GAA1 die erste Rotationsache RA1 für die erste Laufrolle 36 und den zweiten Gelenkachsenabschnitt GAA2 der zweiten Rotationsachse RA2 für die zweite Laufrolle 37 ausbildet, und wobei auch hier die jeweils erste Rotationsachse RA1 versetzt, insbesondere parallel versetzt, zu der jeweils zweiten Rotationsachse RA2 verläuft.

Dabei kann die Gelenkachse GAS auch bei dieser Ausführungsvariante einteilig, insbesondere einstückig ausgebildet sein, und die an ihren jeweiligen ersten und zweiten freien Enden GAS1, GAS2 die ersten und zweiten Gelenkachsenabschnitt GAA1, GAA2 aufweisen, bzw. ausbilden. Alternativ kann die Gelenkachse GAS auch mehrteilig ausgebildet sein, und beispielsweise jeder erste und zweite Gelenkachsenabschnitt GAA1, GAA2 ein separates Teil bzw. Bestandteil der Gelenkachse GAS ausbilden, die fest, jedoch vorzugsweise lösbar, miteinander verbunden sind. Vorteilhaft kann die Gelenkachse GAS aus einem Vollmaterial gebildet, insbesondere hergestellt sein.

Insbesondere ist die Länge des jeweiligen ersten und zweiten Gelenkachsenabschnitt GAA1, GAA2 der ersten und zweiten Rotationsachse RA1, RA2 an die Breite der entsprechend dort aufgenommenen Laufrolle 34...37 angepasst. Mehr im Detail kann die Länge entlang der Längserstreckung des jeweiligen ersten und zweiten Gelenkachsenabschnitt GAA1, GAA2 der Gelenkachse GAS der Breite der Lauffläche der entsprechend dort angeordneten Laufrolle 34...37 entsprechen.

In anderen Worten weist die Gelenkachse GAS der Transportpalette 3 also zwei Rotationsachsen, nämlich die erste und zweite Rotationachse RA1, RA2 auf. Mehr im Detail kann die jeweils zweite Rotationsachse RA2 als axialer Lagersitz für die jeweils zweite Laufrolle 35 und 37 und die erste Rotationsachse RA1 als exzentrischer Lagersitz für die jeweils erste Laufrolle 34 und 36 ausgebildet sein. Dabei kann der parallele Abstand der zentrischen Mittellinie der ersten Rotationsachse RA1 zu der zentrischen Mittlinie der zweiten Rotationsachse RA2 zwischen 0,1mm und 0,7mm vorzugsweise 0,2 mm betragen.

Auf jeder Seite der Gelenkachse GAS befinden sich im Bereich der jeweiligen freien Enden GAS1, GAS2 jeweils ein Laufrollenpaar, bestehend aus einer ersten und einer zweiten Laufrolle 34 und 35 bzw. 36 und 37.

Ferner kann die Gelenkachse GAS an jeder Seite im Bereich der freien Enden GAS1, GAS2 jeweils eine Verspanneinrichtung VE1, VE2 zum Verspannen der jeweils ersten Laufrollen 34 und 36 gegenüber den jeweils zweiten Laufrollen 35 und 37 aufweisen. Mehr im Detail kann die jeweilige Verspanneinrichtung VE1, VE2 als Schraubverspanneinrichtung, vorzugsweise als Außensechskant-Schraubverspanneinrichtung, ausgebildet sein, die über eine Spannkraft die jeweils die auf der ersten Rotationsachse RA1 angeordneten ersten Laufrollen 34 und 36 gegen die jeweils auf der zweiten Rotationsachse RA2 angeordneten zweiten Laufrollen 35 und 37 derart verspannt, dass die Laufrollen 34...37 auf die sich gegenüberliegenden ersten und zweiten Anlageabschnitte 30.11, 30.21, 31.11, 31.21 gepresst werden. Diese Vorspannung führt zu einer Reduzierung des Lagerspiels sowie zu einer Erhöhung der Traglast. Außerdem können dadurch Ungenauigkeiten, die bei der Fertigung der Führungsschienen aufgetreten sind, ausgeglichen werden. Nach Einstellung der Vorspannung kann die Gelenkachse GAS in der Transportpalette 3 mittels eines lösbaren Fixierelementes mechanisch fixiert, also lagebefestig werden. Dies kann beispielsweise über einen Gewindestift erfolgen.

Insbesondere sind dabei die erste und zweite Laufrolle 34, 35 der ersten Führungs- und Lagereinrichtung 32 zwischen den einander gegenüberliegenden und parallel zur Gelenkachse GAS verlaufenden Führungsflächen 30.1, 30.2 der ersten Führungseinrichtung 30 und die erste und zweite Laufrolle 36, 37 der zweiten Führungs- und Lagereinrichtung 33 zwischen den einander gegenüberliegenden und parallel zur Gelenkachse GAS verlaufenden Führungsflächen 31.1, 31.2 der zweiten Führungseinrichtung 31 geführt. Somit ist die erste und zweite Laufrolle 34...37 der jeweiligen ersten und zweiten Führungs- und Lagereinrichtung 32, 33 zwischen den jeweiligen Führungsfläche 30.1, 30.2 bzw. 31.1, 31.2 der entsprechenden ersten bzw. zweiten Führungseinrichtung 30, 31 parallel der Transportrichtung A geführt und damit insbesondere lotrecht der Führungsebenen FE1 und FE2.

Dabei ist insbesondere vorgesehen, dass die erste Laufrolle 34 der ersten Führungs- und Lagereinrichtung 32 im Bereich des ersten freien Endes GAS1 um die Gelenkachse GAS drehbar an dieser vorgesehen ist, während die zweite Laufrolle 35 auf der dem zweiten freien Ende GAS2 zugewandten Seite der ersten Laufrolle 34 ebenfalls um die Gelenkachse GAS drehbar an dieser vorgesehen ist und zwar der ersten Laufrolle 34 vorzugsweise unmittelbar benachbart anschließend, beispielweise kontaktschlüssig anschließend. Bezogen auf die Längserstreckung der Gelenkachse GAS bildet die erste Laufrolle 34 der ersten Führungs- und Lagereinrichtung 32 ein erstes äußeres Laufrolle 34 und das zweite Laufrolle 35 ein zweites inneres Laufrolle 35 aus, das entlang der Gelenkachse GAS um näherungsweise die Breite des ersten äußeren Laufrolles 34 in Richtung des zweiten freien Endes GAS2 versetzt an der Gelenkachse GAS unmittelbar benachbart dem ersten äußeren Laufrolle 34 vorgesehen ist.

Auf Grund des spiegelsymmetrischen Aufbaus ist die erste Laufrolle 36 der zweiten Führungs- und Lagereinrichtung 33 im Bereich des zweiten freien Endes GAS2 um die Gelenkachse GAS drehbar vorgesehen, während die zweite Laufrolle 37 auf der dem ersten freien Ende GAS1 zugewandten Seite der ersten Laufrolle 36 ebenfalls um die Gelenkachse GAS drehbar vorgesehen und zwar der ersten Laufrolle 36 vorzugsweise unmittelbar benachbart anschließend, beispielweise kontaktschlüssig anschließend. Bezogen auf die Längserstreckung der Gelenkachse GAS bildet damit die erste Laufrolle 36 der zweiten Führungs- und Lagereinrichtung 33 ein erstes äußeres Laufrolle 36 und das zweite Laufrolle 37 ein zweites inneres Laufrolle 37 aus, das entlang der Gelenkachse GAS um näherungsweise die Breite des ersten äußeren Laufrolles 36 in Richtung des ersten freien Endes GAS1 versetzt an der Gelenkachse GAS unmittelbar benachbart dem ersten äußeren Laufrolle 36 vorgesehen ist.

Dabei sind das jeweilige erste Rollerlager 34, 36 der ersten und zweiten Führungs- und Lagereinrichtung 32, 33 in einem ersten Anlageabschnitt 30.11, 31.11 der jeweiligen ersten Führungsfläche 30.1, 31.1 und die zweite Laufrolle 35, 37 in einem jeweiligen zweiten Anlageabschnitt 30.21, 31.21 der jeweiligen zweiten Führungsfläche 30.2, 31.2 anliegend und zueinander vorgespannt geführt, wobei der jeweilige erste und zweite Anlageabschnitt 30.11 und 30.21 bzw. 31.11 und 31.21 entlang der Gelenkachse GAS zueinander versetzt und einander gegenüberliegend vorgesehen sind.

Vorteilhaft ist die erste Laufrolle 34 der ersten Führungs- und Lagereinrichtung 32 an dem ersten Anlageabschnitt 30.11 der ersten Führungsfläche 30.1 anliegend gegen die an dem zweiten Anlageabschnitt 30.21 der zweiten Führungsfläche 30.2 anliegende zweite Laufrolle 35 in der ersten Führungseinrichtung 30 vorgespannt geführt und die erste Laufrolle 36 der zweiten Führungs- und Lagereinrichtung 33 an dem ersten Anlageabschnitt 31.11 der ersten Führungsfläche 31.1 anliegend gegen die an dem zweiten Anlageabschnitt 31.21 der zweiten Führungsfläche 31.2 anliegende zweite Laufrolle 37 in der zweiten Führungseinrichtung 31 vorgespannt geführt.

Ferner vorteilhaft ist die erste Laufrolle 34 der ersten Führungs- und Lagereinrichtung 32 an dem ersten Anlageabschnitt 30.11 der ersten Führungsfläche 30.1 anliegend und die an dem zweiten Anlageabschnitt 30.21 der zweiten Führungsfläche 30.2 anliegende zweite Laufrolle 35 in der ersten Führungseinrichtung 30 vorgespannt geführt gegenüber der an dem ersten Anlageabschnitt 31.11 der ersten Führungsfläche 31.1 anliegenden ersten Laufrolle 36 der zweiten Führungs- und Lagereinrichtung 33 und der an dem zweiten Anlageabschnitt 31.21 der zweiten Führungsfläche 31.2 anliegend geführten zweiten Laufrolle 37 der zweiten Führungseinrichtung 31.

Durch die vorgespannte Führung der Gelenkachse GAS in der ersten und zweiten Führungseinrichtung 30, 31 wirken im Bereich der ersten Führungs- und Lagereinrichtung 32 jeweils von dem ersten bzw. zweiten Anlageabschnitt 30.11, 30.21 der ersten Führungseinrichtung 30 lotrecht auf die Gelenkachse GAS gerichtete Vorspannkräfte, die somit entlang der Gelenkachse GAS versetzt und gegenüberliegend, also aufeinander zu gerichtet sind und damit ein Verspannen der ersten Führungs- und Lagereinrichtung 32 entlang der Längserstreckung der Gelenkachse GAS in der ersten Führungseinrichtung 30 gegenüber der in der zweiten Führungseinrichtung 31 geführten zweiten Führungs- und Lagereinrichtung 33 sicherstellen, während im Bereich der zweiten Führungs- und Lagereinrichtung 33 jeweils von dem ersten bzw. zweiten Anlageabschnitt 31.11, 31.21 der zweiten Führungseinrichtung 31 lotrecht auf die Gelenkachse GAS gerichtete Vorspannkräfte, die somit entlang der Gelenkachse GAS versetzt und gegenüberliegend, also aufeinander zu gerichtet sind und damit ein Verspannen zweiten ersten Führungs- und Lagereinrichtung 33 entlang der Längserstreckung der Gelenkachse GAS in der zweiten Führungseinrichtung 31 gegenüber der in der ersten Führungseinrichtung 30 geführten ersten Führungs- und Lagereinrichtung 32 sicherstellen.

Die erste Führungseinrichtung 30 bildet hierfür zwischen der ersten und zweiten Führungsfläche 30.1, 30.2 einen ersten Führungsraum FR1 aus, der im Bereich der ersten und zweiten Anlagefläche 30.11, 30.21 in den ersten Führungsraum FR1 zurückspringt, also in diesem Bereich gestuft ausgebildet ist, derart, dass die erste Führungsrolle 34 der ersten Führungs- und Lagereinrichtung 32 an der ersten Führungsfläche 30.1 im Bereich des in den ersten Führungsraum FR1 zurückspringenden ersten Anlageabschnitt 30.11 anliegt und die zweite Führungsrolle 35 an der zweiten Führungsfläche 30.2 im Bereich des in den ersten Führungsraum FR1 zurückspringenden zweiten Anlageabschnittes 30.21 anliegt, während die zweite Führungsrolle 35 der ersten Führungs- und Lagereinrichtung 32 an dem nicht in ersten den Führungsraum FR1 zurückspringenden Teilabschnitt von der ersten Führungsfläche 30.1 frei kommt, also insbesondere nicht anliegt und die erste Führungsrolle 34 von dem nicht in den ersten Führungsraum FR1 zurückspringenden Teilabschnitt der zweiten Führungsfläche 30.2 freikommt.

Zudem bildet auch die zweite Führungseinrichtung 31 zwischen der ersten und zweiten Führungsfläche 31.1, 31.2 einen zweiten Führungsraum FR2 aus, der im Bereich der ersten und zweiten Anlagefläche 31.11, 31.21 in den zweiten Führungsraum FR2 zurückspringt, also in diesem Bereich gestuft ausgebildet ist, derart, dass die erste Führungsrolle 36 der zweiten Führungs- und Lagereinrichtung 33 an der ersten Führungsfläche 31.1 im Bereich des in den zweiten Führungsraum FR2 zurückspringenden ersten Anlageabschnitt 31.11 anliegt und die zweite Führungsrolle 37 an der zweiten Führungsfläche 31.2 im Bereich des in den zweiten Führungsraum FR2 zurückspringenden zweiten Anlageabschnittes 31.21 anliegt, während die zweite Führungsrolle 37 der zweiten Führungs- und Lagereinrichtung 33 an dem nicht in zweiten den Führungsraum FR2 zurückspringenden Teilabschnitt von der ersten Führungsfläche 31.1 frei kommt, also insbesondere nicht anliegt und die erste Führungsrolle 36 von dem nicht in den zweiten Führungsraum FR2 zurückspringenden Teilabschnitt der zweiten Führungsfläche 31.2 freikommt.

Wird das Transportelement 2 in Transportrichtung A gefördert, so drehen sich die erste und zweite Laufrolle 34...37 hierdurch jeweils gegensinnig zueinander um die durch die Gelenkachse GAS gebildete Drehachse, die vorzugsweise drehfest ausgebildet ist. Dabei kann die Gelenkachse GAS über ein Haltemittel 40, beispielsweise eine Madenschrauben, fest aber lösbar in einem Gelenkabschnitt 20.1 der jeweiligen Transportpalette 3 fixiert sein und an einer Drehung, also einer Rotation um die Längserstreckung der Gelenkachse GAS, gehindert werden. Die gegensinnige Drehung der jeweiligen ersten Laufrolle 34, 36 zu den jeweiligen zweiten Laufrolle 35, 37 entsteht durch die jeweils gestufte Ausbildung der entsprechenden ersten und zweiten Führungsräume FR1, FR2, so dass sich die erste Laufrolle 34, 36 nur an dem ersten Anlageabschnitt, 30.11, 31.11 der jeweiligen ersten Führungsfläche 30.1, 31.1 und die zweite Laufrolle 35, 37 nur an dem zweiten Anlagenabschnitt 30.21, 31.21 der jeweiligen zweiten Führungsfläche 30.2, 31.2 anliegend abrollen bzw. abwälzen.

Dabei zeigt die Figur 6 eine Ausführungsvariante der Transportpaletten 3, bei der sich zwischen zwei benachbarten Gelenkachsen GAS an der der Oberseite 3.1 gegenüberliegenden Unterseite 3.2 zwei weitere drehbare Laufrollen 50, 51 an der entsprechenden Transportpalette 3 angeordnet befinden, die in der darstellten Ausführungsvariante zur vertikalen Führung der Transportpaletten 3 zwischen der ersten und zweiten Führungseinrichtung 30, 31 sowie einer zwischen den beiden Laufrollen 50, 51 vorgesehenen weiteren Führungsschiene 52 geführt sind. Die Führungsschiene 52 kann dabei an der ersten und zweiten Führungseinrichtung 30, 31, insbesondere an deren Unterseite, die beispielsweise einen Führungseinrichtungsboden ausbildet, angeordnet, insbesondere verschraubt sein. Insbesondere liegen die beiden Rollenlagen 40,51 hierfür insbesondere an der sich parallel zur Transportrichtung A erstreckenden mittleren Führungsschiene 52 und wälzen bzw. rollen sich an dieser ab.

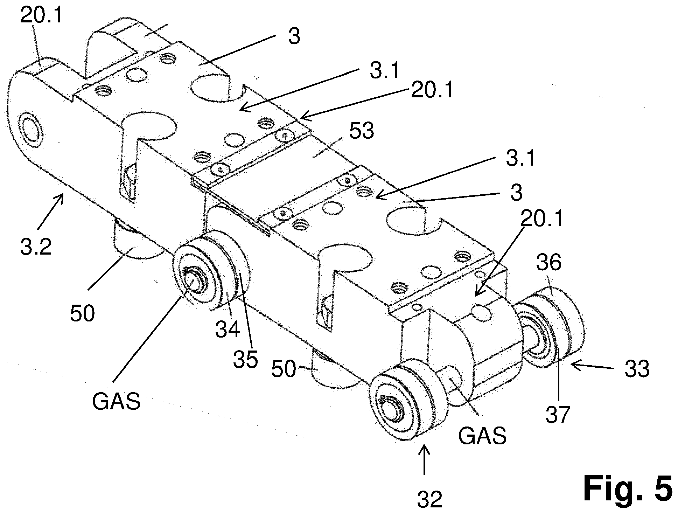

Figur 5 zeigt in perspektivischer Darstellung eine beispielhafte Ausführungsvariante zweier freigestellter und gelenkig über ein Kettengelenk 4 miteinander verbundener Transportpaletten 3 des erfindungsgemäßen Transportsystems 1. Insbesondere weisen die Transportpaletten 3 dabei in ihrem jeweiligen Gelenkabschnitt 20.1 an ihren jeweiligen Oberseiten 3.1 einen elastischen Verbindungsabschnitt 53 auf, der den jeweiligen Gelenkabschnitt 20.1 zweier benachbarter Transportpaletten 3 elastisch überspannt. Insbesondere kann der Verbindungsabschnitt 53 elastisch vorgespannt an den jeweiligen Oberseiten 3.1 zweier benachbarter Transportpaletten 3 angeordnet, insbesondere angenietet, sein. Der Verbindungsabschnitt 53 kann aus einem elastischen natürlichen und/oder künstlichen Textilgewebe hergestellt sein.

### Bezugszeichenliste

- 1: Transportsystem
- 2: Transportelement
- 3: Transportpalette
- 3.1: Oberseite
- 3.11: Aufnahme
- 3.2: Unterseite
- 4: Kettenrad
- 4.1: Achse
- 4.2: Aufnahme
- 5: Kettenrad
- 5.1: Achse
- 5.2: Ausnahme
- 6, 7: Umlenkung
- 8.1, 8.2: Umlenkung
- 9.1, 9.2: Umlenkung
- 10.1, 10.2: Umlenkung
- 11.1, 11.2: Umlenkung
- 12: Linie
- 13: Maschinenrahmen
- 14a, 14b: Abschnitt der Umlaufbahn der Transportpaletten 3
- 14b.1: meanderförmiger oder meanderartiger Teilabschnitt der Umlaufbahn der Transportpaletten 3
- 18: Position
- 19: Körper
- 20: Kettengelenk
- 20.1: Gelenkabschnitt

- 30: erste Führungseinrichtung
- 30.1: erste Führungsfläche
- 30.11: erster Anlageabschnitt
- 30.2: zweite Führungsfläche
- 30.21: zweiter Anlageabschnitt
- 31: zweite Führungseinrichtung
- 31.1: erste Führungsfläche
- 31.11: erster Anlageabschnitt
- 31.2: zweite Führungsfläche
- 31.21: zweiter Anlageabschnitt
- 32: erste Führungs- und Lagereinrichtung
- 33: zweite Führungs- und Lagereinrichtung
- 34...37: Laufrolle

- 40: Haltemittel

- 50: Laufrolle
- 51: Laufrolle
- 52: Führungsschiene
- 52.1: Oberseite
- 53: Verbindungsabschnitt

- A: Transportrichtung
- EM: Elektromotor
- GAS: Gelenkachse
- GAS1: erstes freies Ende
- GAS2: zweites freies Ende
- GAA1: erster Gelenkachsenabschnitt
- GAA2: zweiter Gelenkachsenabschnitt
- FE1: erste Führungsebene
- FE2: zweite Führungsebene
- FR1: erster Führungsraum
- FR2: zweiter Führungsraum
- TS: Transportstrecke
- TF: Transportfläche
- ME: Mittelebene
- RA1: erste Rotationsachse
- RA2: zweite Rotationsachse
- VE1: erste Verspanneinrichtung
- VE2: zweite Verspanneinrichtung

## Patentansprüche

1. Transportsystem (1) zur Beförderung von Gegenständen entlang einer Transportstrecke (TS), umfassend wenigstens ein Transportelement (2), welches aus einer Vielzahl von über Kettengelenke (20) gelenkig miteinander zu einer geschlossenen Schleife verbundenen Kettengliedern besteht und über wenigstens ein Kettenrad (4, 5) in zumindest einer Transportrichtung (A) umlaufend antreibbar ist, wobei die Kettenglieder als Transportpaletten (3) ausgebildet sind, die zumindest abschnittsweise entlang der Transportstrecke (TS) beidseitig mittels einer ersten und zweiten Führungseinrichtung (30, 31) geführt sind, bei dem ein Kettengelenk (20) jeweils zumindest eine zwischen der ersten und zweiten Führungseinrichtung (30, 31) verlaufende Gelenkachse (GAS) aufweist, die an einem ersten freien Ende (GAS1) mit einer ersten Führungs- und Lagereinrichtung (32) in der ersten Führungseinrichtung (30) und an einem zweiten freien Ende (GAS2) mit einer zweiten Führungs- und Lagereinrichtung (33) in der zweiten Führungseinrichtung (31) geführt ist, wobei die erste und zweite Führungs- und Lagereinrichtung (32, 33) jeweils wenigstens eine erste und zweite Laufrolle (34...37) umfassen, die zwischen einer ersten und zweiten, einander gegenüberliegenden und parallel zur Gelenkachse (GAS) verlaufenden Führungsfläche (30.1 und 30.2 bzw. 31.1 und 31.2) der jeweiligen Führungseinrichtung (30, 31) geführt sind, wobei die erste Laufrolle (34, 36) in einem ersten Anlageabschnitt (30.11, 31.11) der ersten Führungsfläche (30.1, 31.1) und die zweite Laufrolle (35, 37) in einem zweiten Anlageabschnitt (30.21, 31.21) der zweiten Führungsfläche (30.2, 31.2) anliegen und zueinander vorgespannt geführt sind, wobei der erste und zweite Anlageabschnitt (30.11 und 30.21 bzw. 31.11 und 31.21) entlang der Gelenkachse (GAS) zueinander versetzt und einander gegenüberliegend sind **dadurch gekennzeichnet, dass** zumindest eine Gelenkachse (GAS) wenigstens einer Transportpalette (3) des Transportsystems (1) an dem ersten und zweiten freien Ende (GAS1, GAS2) einen ersten und zweiten Gelenkachsenabschnitt (GAA1, GAA2) aufweist, wobei der erste Gelenkachsenabschnitt (GAA1) eine erste Rotationsache (RA1) für die jeweils erste Laufrolle (34 und 36) und der jeweils zweite Gelenkachsenabschnitt (GAA2) eine zweite Rotationsachse (RA2) für die jeweils zweite Laufrolle (35 und 37) ausbildet, und wobei die jeweils erste Rotationsachse (RA1) versetzt, insbesondere parallel versetzt, zu der jeweils zweiten Rotationsachse (RA2) verläuft.

2. Transportsystem (1) nach Anspruch 1, **dadurch gekennzeichnet, dass** die
zumindest eine
und/oder eine zweite Gelenkachse (GA1, GA2) im Bereich der jeweiligen Gelenkachsenabschnitte (GAA1, GAA2) als Exzenterachse ausgebildet ist.

3. Transportsystem nach Anspruch 1 oder 2, **dadurch gekennzeichnet, dass** auf den jeweiligen Gelenkachsenabschnitten (GAA1, GAA2) der ersten und zweiten Rotationsachsen (RA1, RA2) Laufrollen (34...37) mit einem insbesondere identischen Außendurchmesser der Laufflächen drehbar angeordnet sind, derart, dass sich an den Laufflächen der Laufrollen (34...37) ein Höhenversatz einstellt, der die Verspannung der Laufrollen (34...37) an den ersten und zweiten Anlageabschnitten (30.11, 30.21, 31.11, 31.21) unterstützt.

4. Transportsystem nach einem der vorangehenden Ansprüche, **dadurch gekennzeichnet, dass** die Gelenkachse (GAS) an dem ersten freien Ende (GAS1) den ersten und zweiten Gelenkachsenabschnitt (GAA1, GAA2) aufweist, wobei der erste Gelenkachsenabschnitt (GAA1) die erste Rotationsache (RA1) für die erste Laufrolle (34) und den zweiten Gelenkachsenabschnitt (GAA2) der zweiten Rotationsachse (RA2) für die zweite Laufrolle (35) ausbildet, und wobei die jeweils erste Rotationsachse (RA1) versetzt, insbesondere parallel versetzt, zu der jeweils zweiten Rotationsachse (RA2) verläuft.

5. Transportsystem nach einem der vorangehenden Ansprüche, **dadurch gekennzeichnet, dass** die Gelenkachse (GAS) an dem zweiten freien Ende (GAS2) den ersten und zweiten Gelenkachsenabschnitt (GAA1, GAA2) aufweist, wobei der erste Gelenkachsenabschnitt (GAA1) die erste Rotationsache (RA1) für die erste Laufrolle (36) und den zweiten Gelenkachsenabschnitt (GAA2) der zweiten Rotationsachse (RA2) für die zweite Laufrolle (37) ausbildet, und wobei die jeweils erste Rotationsachse (RA1) versetzt, insbesondere parallel versetzt, zu der jeweils zweiten Rotationsachse (RA2) verläuft.

6. Transportsystem nach einem der vorangehenden Ansprüche, **dadurch gekennzeichnet, dass** die Gelenkachse (GAS) einteilig, insbesondere einstückig ausgebildet ist und/oder aus einem Vollmaterial hergestellt ist.

7. Transportsystem nach einem der vorangehenden Ansprüche, **dadurch gekennzeichnet, dass** die Länge des jeweiligen ersten und zweiten Gelenkachsenabschnitt (GAA1, GAA2) der ersten und zweiten Rotationsachsen (RA1, RA2) an die Breite der entsprechend dort aufgenommenen Laufrollen (34...37) angepasst ist, insbesondere der Breite der Lauffläche der entsprechend dort angeordneten Laufrolle (34...37) entspricht.

8. Transportsystem nach einem der vorangehenden Ansprüche, **dadurch gekennzeichnet, dass** die jeweils zweite Rotationsachse (RA2) der Gelenkachse (GAS) als axialer Lagersitz für die jeweils zweite Laufrolle (35 und 37) und die erste Rotationsachse (RA1) als exzentrischer Lagersitz für die jeweils erste Laufrolle (34 und 36) ausgebildet ist.

9. Transportsystem nach einem der vorangehenden Ansprüche, **dadurch gekennzeichnet, dass** der parallele Abstand der zentrischen Mittellinie der ersten Rotationsachse (RA1) zu der zentrischen Mittlinie der zweiten Rotationsachse (RA2) zwischen 0,1mm und 0,7mm, vorzugsweise 0,2 mm, beträgt.

10. Transportsystem nach einem der vorangehenden Ansprüche, **dadurch gekennzeichnet, dass** die Gelenkachse (GAS) an jeder Seite im Bereich der freien Enden (GAS1, GAS2) jeweils eine Verspanneinrichtung (VE1, VE2) zum verstellbaren Verspannen der jeweils ersten Laufrollen (34 und 36) gegenüber den jeweils zweiten Laufrollen (35 und 37) aufweist.

11. Transportsystem nach Anspruch 10, **dadurch gekennzeichnet, dass** die jeweilige Verspanneinrichtung (VE1, VE2) als Schraubverspanneinrichtung, vorzugsweise als Außensechskant-Schraubverspanneinrichtung, ausgebildet ist, die über eine Spannkraft die jeweils die auf der ersten Rotationsachse (RA1) angeordneten ersten Laufrollen (34 und 36) gegen die jeweils auf der zweiten Rotationsachse (RA2) angeordneten zweiten Laufrollen (35 und 37) derart verspannt, dass die Laufrollen (34...37) auf die sich gegenüberliegenden ersten und zweiten Anlageabschnitte (30.11, 30.21, 31.11, 31.21) gepresst werden.

12. Transportsystem nach einem der vorangehenden Ansprüche, **dadurch gekennzeichnet, dass** die Gelenkachse (GAS) in der Transportpalette (3) mittels eines lösbaren Fixierelementes, insbesondere eines Gewindestiftes, mechanisch fixierbar ist.

## Claims

1. Transport system (1) for conveying objects along a transport route (TS), comprising at least one transport element (2), which consists of a plurality of chain links connected with one another by chain joints (20) in an articulated manner to form a closed loop and which can be driven in a rotary manner in at least one transport direction (A) by at least one chain sprocket (4, 5), wherein the chain links are constituted as transport pallets (3), which are guided at least in sections along the transport section (TS) on both sides by means of a first and second guiding device (30, 31), in which a chain joint (20) in each case comprises at least one joint axis (GAS) running between the first and second guiding device (30, 31), which is guided at a first free end (GAS1) with a first guiding and bearing device (32) in the first guiding device (30) and at a second free end (GAS2) with a second guiding and bearing device (33) in the second guiding device (31), wherein the first and second guiding and bearing device (32, 33) each comprise at least a first and second roller (34...37), which are guided between a first and second guiding surface (30.1 and 30.2 and respectively 31.1 and 31.2) of the respective guiding device (30, 31), said guiding surfaces running opposite one another and parallel to the joint axis (GAS), wherein the first roller (34, 36) abuts on a first bearing section (30.11, 31.11) of the first guiding surface (30.1, 31.1) and the second roller (35, 37) abuts on a second bearing section (30.21, 31.21) of the second guiding surface (30.2, 31.2) the first and second rollers (34, 36; 35, 37) being guided in prestressed manner with respect to one another, wherein the first and second bearing section (30.11 and 30.21 and respectively 31.11 and 31.21) are offset with respect to one another and lie opposite one another along the joint axis (GAS), **characterised in that** at least one joint axis (GAS) of at least one transport pallet (3) of the transport system (1) comprises a first and second joint axis section (GAA1, GAA2) at the first and second free end (GAS1, GAS2), wherein the first joint axis section (GAA1) constitutes a first axis of rotation (RA1) for the respective first roller (34 and 36) and the respective second joint axis section (GAA2) constitutes a second axis of rotation (RA2) for the respective second roller (35 and 37), and wherein the respective first axis of rotation (RA1) runs offset, in particular offset in parallel, to the respective second axis of rotation (RA2).

2. Transport system (1) according to claim 1, **characterised in that** the at least one and/or a second joint axis (GA1, GA2) is configured as an eccentric axis in the region of the respective joint axis sections (GAA1, GAA2).

3. Transport system according to claim 1 or 2, **characterised in that** rollers (34... 37) with an in particular identical outer diameter of the running surfaces are arranged rotatably on the respective joint axis sections (GAA1, GAA2) of the first and second axes of rotation (RA1, RA2), in such a way that a height offset arises at the running surfaces of the rollers (34... 37), which supports the bracing of the rollers (34... 37) at the first and second bearing sections (30.11, 30.21, 31.11, 31.21).

4. Transport system according to any one of the preceding claims, **characterised in that** the joint axis (GAS) comprises the first and second joint axis sections (GAA1, GAA2) at the first free end (GAS1), wherein the first joint axis section (GAA1) forms the first axis of rotation (RA1) for the first roller (34) and the second joint axis section (GAA2) the second axis of rotation (RA2) for the second roller (35), and wherein the respective first axis of rotation (RA1) runs offset, in particular offset in parallel, to the respective second axis of rotation (RA2).

5. Transport system according to any one of the preceding claims, **characterised in that** the joint axis (GAS) comprises the first and second joint axis section (GAA1, GAA2) at the second free end (GAS2), wherein the first joint axial section (GAA1) constitutes the first axis of rotation (RA1) for the first roller (36) and the second joint axis section (GAA2) constitutes the second axis of rotation (RA2) for the second roller (37), and wherein the respective first axis of rotation (RA1) runs offset, in particular offset in parallel, to the respective second axis of rotation (RA2).

6. Transport system according to any one of the preceding claims, **characterised in that** the joint axis (GAS) is constituted in one part, in particular monobloc, and/or is produced from a solid material.

7. Transport system according to any one of the preceding claims, **characterised in that** the length of the respective first and second joint axis section (GAA1, GAA2) of the first and second axis of rotation (RA1, RA2) is adapted to the width of the rollers (34...37) correspondingly accommodated there, in particular corresponds to the width of the running surface of the roller (34...37) correspondingly arranged there.

8. Transport system according to any one of the preceding claims, **characterised in that** the respective second axis of rotation (RA2) of the joint axis (GAS) is constituted as an axial bearing seat for the respective second roller (35 and 37) and the first axis of rotation (RA1) is constituted as an eccentric bearing seat for the respective first roller (34 and 36).

9. Transport system according to any one of the preceding claims, **characterised in that** the parallel distance of the centric centre-line of the first axis of rotation (RA1) to the centric centre-line of the second axis of rotation (RA2) amounts to between 0.1 mm and 0.7 mm, preferably 0.2 mm.

10. Transport system according to any one of the preceding claims, **characterised in that** the joint axis (GAS) comprises at each side in the region of the free ends (GAS1, GAS2) a bracing device (VE1, VE2) for the adjustable bracing of the respective first rollers (34 and 36) with respect to the respective second rollers (35 and 37).

11. Transport system according to claim 10, **characterised in that** the respective bracing device (VE1, VE2) is constituted as a bolt bracing device, preferably as an external hexagonal bolt bracing device which, via a tensioning force, braces the first rollers (34 and 36) arranged respectively on the first axis of rotation (RA1) against the second rollers (35 and 37) arranged respectively on the second axis of rotation (RA2), in such a way that the rollers (34... 37) are pressed on the opposing first and second bearing sections (30.11, 30.21, 31.11, 31.21).

12. Transport system according to any one of the preceding claims, **characterised in that** the joint axis (GAS) can be fixed mechanically in the transport pallet (3) by means of a detachable fixing element, in particular a threaded pin.

## Revendications

1. Système de transport (1) pour transporter des objets le long d'une section de transport (TS), comprenant au moins un élément de transport (2), lequel est composé d'une pluralité de maillons de chaine reliés entre eux de façon articulée par des articulations de chaine (20) en une boucle fermée et qui peut être entraîné en rotation par au moins une roue à chaine (4, 5) dans au moins une direction de transport (A), sachant que les maillons de chaine sont constitués comme des palettes de transport (3), qui sont guidées au moins par sections le long de la section de transport (TS) des deux côtés au moyen d'un premier et d'un deuxième système de guidage (30, 31), pour lequel une articulation de chaine (20) comporte respectivement au moins un axe d'articulation (GAS) passant entre le premier et le deuxième système de guidage (30, 31), qui est guidé à une première extrémité libre (GAS1) avec un premier système de guidage et de positionnement (32) dans le premier système de guidage (30) et à une deuxième extrémité libre (GAS2) avec un deuxième système de guidage et de positionnement (33) dans le deuxième système de guidage (31), sachant que le premier et le deuxième système de guidage et de positionnement (32, 33) comprennent respectivement au moins un premier et un deuxième galet de roulement (34...37), qui sont guidés entre une première et une deuxième surface de guidage (30.1 et 30.2 ou 31.1 et 31.2) du système de guidage respectif (30, 31), opposées l'une à l'autre et parallèlement à l'axe d'articulation (GAS), sachant que le premier galet de roulement (34, 36) est adjacent à une première section d'appui (30.11, 31.11) de la première surface de guidage (30.1, 31.1) et le deuxième galet de roulement (35, 37) est adjacent à une deuxième section d'appui (30.21, 31.21) de la deuxième surface de guidage (30.2, 31.2) et sont guidés de façon précontrainte l'un par rapport à l'autre, sachant que la première et la deuxième section d'appui (30.11 et 30.21 ou 31.11 et 31.21) sont décalées l'une par rapport à l'autre le long de l'axe d'articulation (GAS) et sont opposées l'une à l'autre, **caractérisé en ce qu'**au moins un axe d'articulation (GAS) d'au moins une palette de transport (3) du système de transport (1) comporte à la première et à la deuxième extrémité libre (GAS1, GAS2) une première et une deuxième section d'axe d'articulation (GAA1, GAA2), sachant que la première section d'axe d'articulation (GAA1) constitue un premier axe de rotation (RA1) pour le premier galet de roulement respectif (34 et 36) et la deuxième section d'axe d'articulation respective (GAA2) un deuxième axe de rotation (RA2) pour le deuxième galet de roulement respectif (35 et 37) et sachant que le premier axe de rotation respectif (RA1) passe de façon déportée, en particulier parallèlement déportée, par rapport au deuxième axe de rotation respectif (RA2).

2. Système de transport (1) selon la revendication 1, **caractérisé en ce que** l'au moins un et/ou un deuxième axe d'articulation (GA1, GA2) est constitué dans la zone des sections d'axe d'articulation respectives (GAA1, GAA2) sous la forme d'axe excentrique.

3. Système de transport selon la revendication 1 ou 2, **caractérisé en ce que** sur les sections d'axe d'articulation respectives (GAA1, GAA2) des premier et deuxième axes de rotation (RA1, RA2), des galets de roulement (34...37) avec un diamètre extérieur en particulier identique des surfaces de roulement sont disposés pouvant tourner de telle manière qu'il s'établit sur les surfaces de roulement des galets de roulement (34...37) un déport en hauteur, qui facilite le serrage des galets de roulement (34...37) sur les première et deuxième sections d'appui (30.11, 30.21, 31.11, 31.21).

4. Système de transport selon l'une quelconque des revendications précédentes, **caractérisé en ce que** l'axe d'articulation (GAS) comporte à la première extrémité libre (GAS1) la première et la deuxième section d'axe d'articulation (GAA1, GAA2), sachant que la première section d'axe d'articulation (GAA1) constitue le premier axe de rotation (RA1) pour le premier galet de roulement (34) et la deuxième section d'axe d'articulation (GAA2) du deuxième axe de rotation (RA2) pour le deuxième galet de roulement (35) et sachant que le premier axe de rotation (RA1) respectif passe de façon déportée, en particulier parallèlement déportée, par rapport au deuxième axe de rotation (RA2) respectif.

5. Système de transport selon l'une quelconque des revendications précédentes, **caractérisé en ce que** l'axe d'articulation (GAS) comporte à la deuxième extrémité libre (GAS2) la première et la deuxième section d'axe d'articulation (GAA1, GAA2), sachant que la première section d'axe d'articulation (GAA1) constitue le premier axe de rotation (RA1) pour le premier galet de roulement (36) et la deuxième section d'axe d'articulation (GAA2) du deuxième axe de rotation (RA2) pour le deuxième galet de roulement (37) et sachant que le premier axe de rotation (RA1) respectif passe de façon déportée, en particulier parallèlement déportée, par rapport au deuxième axe de rotation (RA2) respectif.

6. Système de transport selon l'une quelconque des revendications précédentes **caractérisé en ce que** l'axe d'articulation (GAS) est constitué en une partie, en particulier en une pièce et/ou est réalisé en un matériau plein.

7. Système de transport selon l'une quelconque des revendications précédentes, **caractérisé en ce que** la longueur de la première et de la deuxième section d'axe d'articulation respective (GAA1, GAA2) des premier et deuxième axes de rotation (RA1, RA2) est adaptée à la largeur des galets de roulement (34...37) logés à cet endroit de façon correspondante, correspond en particulier à la largeur de la surface de roulement du galet de roulement (34...37) disposé à cet endroit de façon correspondante.

8. Système de transport selon l'une quelconque des revendications précédentes, **caractérisé en ce que** le deuxième axe de rotation (RA2) respectif de l'axe d'articulation (GAS) est constitué en tant que siège de palier axial pour le deuxième galet de roulement (35 et 37) respectif et le premier axe de rotation (RA1) en tant que siège de palier excentrique pour le premier galet de roulement (34 et 36) respectif.

9. Système de transport selon l'une quelconque des revendications précédentes, **caractérisé en ce que** la distance parallèle entre la ligne médiane centrale du premier axe de rotation (RA1) et la ligne médiane centrale du deuxième axe de rotation (RA2) se situe entre 0,1 mm et 0,7 mm, de préférence 0,2 mm.

10. Système de transport selon l'une quelconque des revendications précédentes, **caractérisé en ce que** l'axe d'articulation (GAS) comporte sur chaque côté dans la zone des extrémités libres (GAS1, GAS2) respectivement un système de serrage (VE1, VE2) pour le serrage réglable des premiers galets de roulement (34 et 36) respectifs par rapport aux deuxièmes galets de roulement (35 et 37) respectifs.

11. Système de transport selon la revendication 10, **caractérisé en ce que** le système de serrage (VE1, VE2) respectif est constitué comme système de serrage par vis, de préférence sous la forme d'un système de serrage par vis à six pans, qui serre par le biais d'une force de serrage les premiers galets de roulement (34 et 36) disposés respectivement sur le premier axe de rotation (RA1) contre les deuxièmes galets de roulement (35 et 37) disposés respectivement sur le deuxième axe de rotation (RA2) de telle manière que les galets de roulement (34...37) sont comprimés sur les premières et deuxièmes sections d'appui (30.11, 30.21, 31.11, 31.21) s'opposant.

12. Système de transport selon l'une quelconque des revendications précédentes, **caractérisé en ce que** l'axe d'articulation (GAS) peut être fixé mécaniquement dans la palette de transport (3) au moyen d'un élément de fixation amovible, en particulier d'une tige filetée.
